# EUROPEAN PATENT SPECIFICATION

(11) **EP 3 438 397 B1**
(45) Date of publication and mention of the grant of the patent: **23.04.2025**
(21) Application number: 17773898.6
(22) Date of filing: 23.02.2017
(51) Int. Cl.: E06B 3/677, C03C 27/06, E06B 3/663, E06B 3/66

(54) **METHOD FOR MANUFACTURING GLASS PANEL UNIT, AND METHOD FOR MANUFACTURING BUILDING COMPONENT INCLUDING THE GLASS PANEL UNIT**
VERFAHREN ZUR HERSTELLUNG EINER GLASPLATTENEINHEIT, UND VERFAHREN ZUR HERSTELLUNG EINES BAUTEILS EINSCHLIESSLICH DER GLASPLATTENEINHEIT
PROCÉDÉ DE FABRICATION D'UN PANNEAU DE VERRE, ET PROCÉDÉ DE FABRICATION D'UN ÉLÉMENT DE CONSTRUCTION INCLUANT LE PANNEAU DE VERRE

(30) Priority: 31.03.2016 JP 2016072497
(43) Date of publication of application: 06.02.2019
(73) Proprietor: Panasonic Intellectual Property Management Co., Ltd., Osaka-shi, Osaka 540-6207 (JP)
(72) Inventor: HASEGAWA, Kazuya, Osaka-shi, Osaka 540-6207 (JP); ABE, Hiroyuki, Osaka-shi, Osaka 540-6207 (JP); ISHIBASHI, Tasuku, Osaka-shi, Osaka 540-6207 (JP); NONAKA, Masataka, Osaka-shi, Osaka 540-6207 (JP); URIU, Eiichi, Osaka-shi, Osaka 540-6207 (JP)
(74) Representative: Müller-Boré & Partner Patentanwälte PartG mbB
(86) International application number: PCT/JP2017/006762
(87) International publication number: WO 2017/169353

(56) References cited:
- WO-A1-00/15938
- WO-A1-03/095388
- WO-A1-2004/039742
- WO-A1-2010/061418
- WO-A1-2013/172033
- JP-A- H05 501 896
- US-A1- 2003 051 436
- US-A1- 2004 028 846

## Description

### Technical Field

The present disclosure relates to a method for manufacturing a glass panel unit and a method for manufacturing a building component including the glass panel unit, and more particularly relates to a method for manufacturing a glass panel unit with an inner space with a reduced pressure formed between a first glass panel and a second glass panel and a method for manufacturing a building component including such a glass panel unit.

### Background Art

A thermally insulating glass panel unit is obtained by hermetically sealing up an inner space between a pair of glass panels that are arranged to face each other while maintaining a reduced pressure in the inner space.

Patent Literature 1 discloses a technique, according to which an exhaust pipe of glass is joined to a glass panel so as to communicate with a hole provided through the glass panel, and the pressure in the inner space of the glass panel unit is reduced through the exhaust pipe before the exhaust pipe is heated and sealed up.

This conventional method leaves traces of the heated and sealed exhaust pipe on the glass panel unit manufactured. This makes it difficult to make a portion, surrounding the exhaust port, of the glass panel unit sufficiently flat, and requires a new exhaust pipe every time evacuation is carried out, thus causing some problems in practice.

Another conventional method is described in WO 2004/039742 A1 describing a glass panel manufacturing method in which a glass panel is formed by sealingly connecting, with a sealant, the peripheral edge parts of two opposing glass plates. Gas is removed through an exhaust hole in the upper plate from the inner space between the two plates by heating the upper plate and sealingly closing the exhaust hole by melting a sealant on the upper side of the upper plate.

### Citation List

### Patent Literature

Patent Literature 1: JP 2001-354456 A WO 2004/039742 A1

### Summary

It is therefore an object of the present disclosure to provide a method of manufacturing a glass panel unit with reduced pressure in the inner space between the glass panels of the glass panel unit in a simpler and more cost-efficient way.

This object is solved by the independent claim. Specific embodiments result from the dependent claims.

### Brief Description of Drawings

FIG. 1 is a plan view of a glass panel unit according to an exemplary embodiment;
FIG. 2 is a cross-sectional view thereof taken along a plane A-A shown in FIG. 1;
FIG. 3 is a perspective view illustrating how a bonding step is performed to manufacture the glass panel unit;
FIG. 4 is a plan view illustrating how to perform the bonding step;
FIG. 5 is a cross-sectional view thereof taken along a plane B-B shown in FIG. 4;
FIG. 6A is a cross-sectional view illustrating a state before an exhaust pipe is connected while an exhausting step is performed to manufacture the glass panel unit;
FIG. 6B is a cross-sectional view illustrating a state after the exhaust pipe has been connected during the exhausting step;
FIG. 7 is a flowchart showing a plurality of steps for manufacturing the glass panel unit;
FIG. 8 is a plan view of a glass panel unit according to a modified example;
FIG. 9 is a cross-sectional view thereof taken along a plane C-C shown in FIG. 8;
FIG. 10 is a flowchart showing a plurality of steps for manufacturing the glass panel unit;
FIG. 11 is a plan view of a building component including a glass panel unit according to the exemplary embodiment; and
FIG. 12 is a flowchart showing a plurality of steps for manufacturing the building component.

### Description of Embodiments

A configuration for a glass panel unit according to an exemplary embodiment will be described.

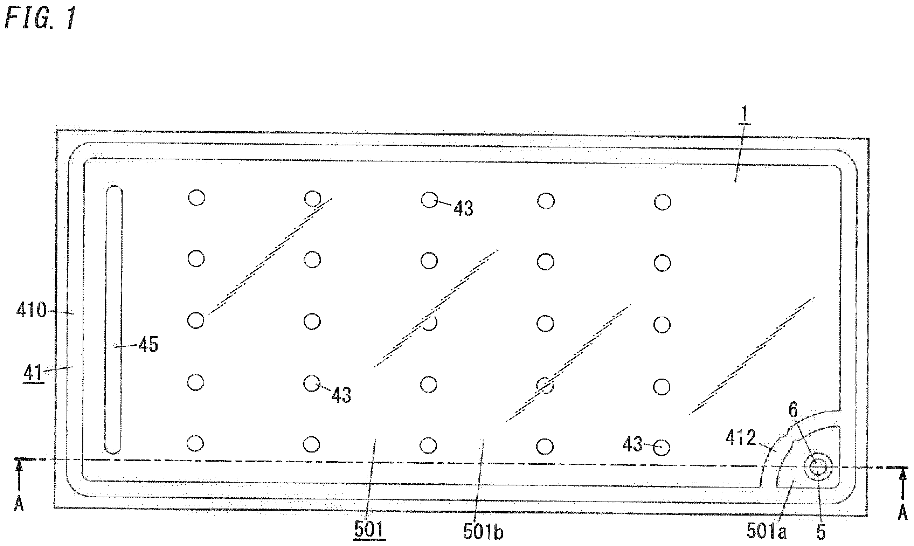

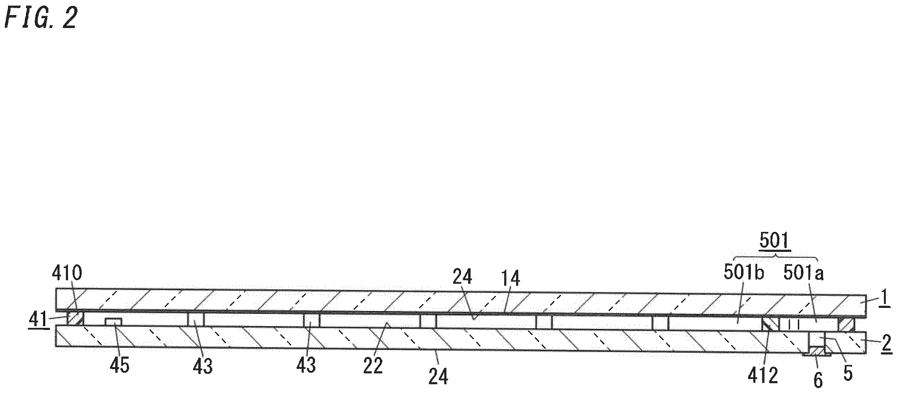

As shown in FIGS. 1 and 2, a glass panel unit according to this exemplary embodiment includes a first glass panel 1, a second glass panel 2, a sealing member 41, a plurality of (or multiple) spacers 43, and a getter 45.

The first glass panel 1 and the second glass panel 2 are arranged to face each other. The first glass panel 1 and the second glass panel 2 are parallel to each other. Between the first glass panel 1 and the second glass panel 2, located are the sealing member 41, the plurality of spacers 43, and the getter 45.

The first glass panel 1 and the second glass panel 2 may be configured as any of various types of glass panes made of soda lime glass, high strain point glass, chemically tempered glass, alkali-free glass, quartz glass, Neoceram, thermally tempered glass, or any other suitable glass.

In the glass panel unit according to this exemplary embodiment, an exhaust port 5 is formed through the second glass panel 2, out of the two glass panels (namely, the first glass panel 1 and the second glass panel 2) (see FIG. 2). The exhaust port 5 penetrates through the second glass panel 2 in the thickness direction thereof. The exhaust port 5 is closed with a closing member 6 in the shape of a cap.

The sealing member 41 includes a rectangular frame 410 made of a thermal adhesive such as a glass frit and an arc-shaped partition 412 also made of a thermal adhesive such as a glass frit. The material for the frame 410 and the material for the partition 412 have mutually different melting temperatures.

The frame 410 is bonded to respective peripheral portions of the first and second glass panels 1 and 2. The peripheral portions of the first and second glass panels 1 and 2 are hermetically bonded together with the frame 410.

The partition 412 separates the inner space 501, surrounded with the frame 410, into a space 501a communicating with the exhaust port 5 and the other space 501b. The plurality of spacers 43 and the getter 45 are located in the space 501b. The space 501b may be a thermally insulated space, of which the pressure has been reduced to a degree of vacuum of 0.1 Pa or less, for example.

The plurality of spacers 43 are dispersed so as to be spaced apart from each other. Each of the spacers 43 is arranged in contact with both of a facing surface 12, facing the second glass panel 2, of the first glass panel 1 and a facing surface 22, facing the first glass panel 1, of the second glass panel 2 (see FIG. 2). The first glass panel 1 includes an infrared reflective film 14, and has its facing surface 12 constituted of the surface of the infrared reflective film 14.

The plurality of spacers 43 are arranged so as to be surrounded with the frame 410. The plurality of spacers 43 has the capability of keeping a predetermined gap between the first and second glass panels 1 and 2. The plurality of spacers 43 are suitably either transparent or semi-transparent. The material, dimensions, shape, arrangement pattern, and other parameters of the plurality of spacers 43 may be determined appropriately.

The getter 45 is a member configured to adsorb molecules of a gas, and is spaced from each of the plurality of spacers 43. The getter 45 is arranged on the facing surface 22 of the second glass panel 2.

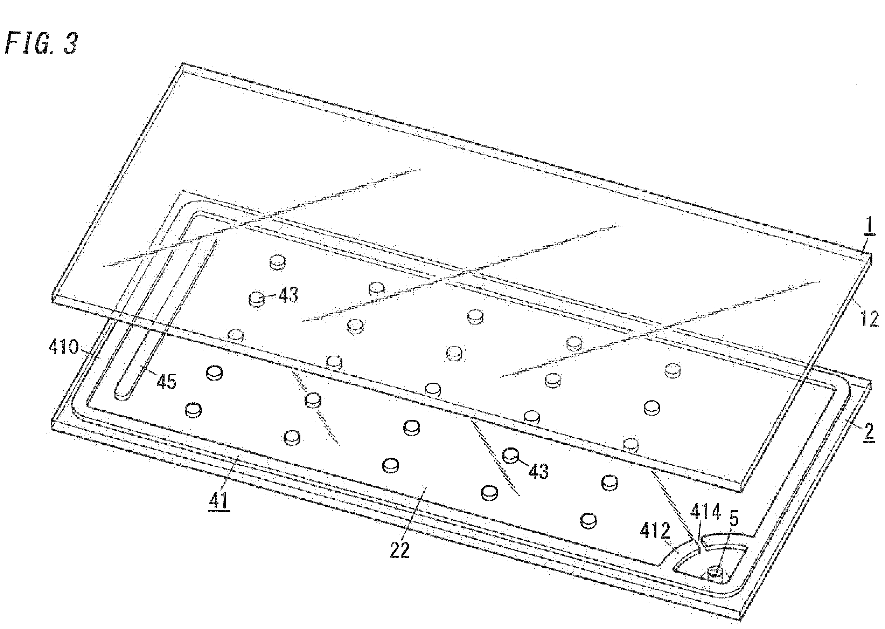

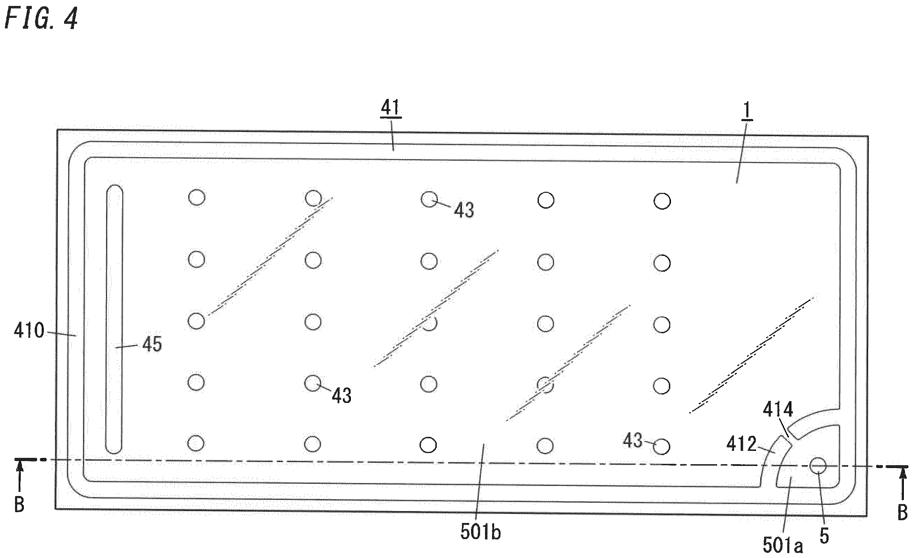

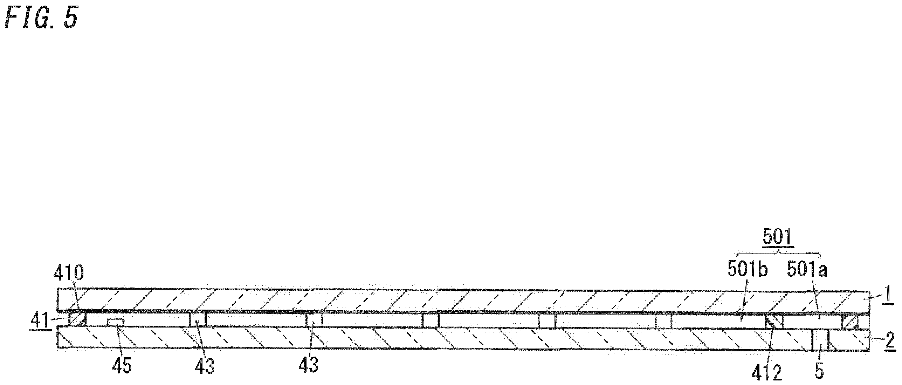

Next, respective steps for manufacturing the glass panel unit according to the exemplary embodiment will be described with reference to FIGS. 3 to 7.

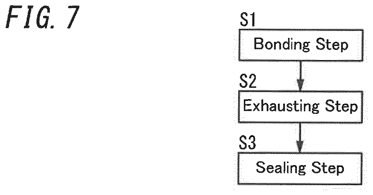

As shown in FIG. 7, a method for manufacturing the glass panel unit according to the exemplary embodiment includes a bonding step S1, an exhausting step S2, and a sealing step S3.

These steps S1, S2, and S3 will be described sequentially.

The bonding step S1 includes arranging the first glass panel 1, the second glass panel 2, the sealing member 41, the plurality of spacers 43, and the getter 45 at their respective predetermined locations as shown in FIGS. 3 to 5.

Specifically, the sealing member 41, the plurality of spacers 43, and the getter 45 are arranged on the second glass panel 2, and the first glass panel 1 is arranged to face the second glass panel 2.

A material for the frame 410 and partition 412 included in the sealing member 41 is applied, with an applicator such as a dispenser, onto an outer periphery of the facing surface 22 of the second glass panel 2 and then dried and pre-baked. The bonding step S1 includes forming an air passage 414 through the partition 412. In the bonding step S1, the spaces 501a and 501b communicate with each other through the air passage 414.

In this exemplary embodiment, the partition 412 is split into two halfway to form the air passage 414 as a gap between the two split portions. However, this is only an example and should not be construed as limiting. Alternatively, an air passage 414 may also be formed between the partition 412 and the frame 410 by making at least one of the two ends of the partition 412 out of contact with the frame 410. Still alternatively, an air passage 414 may also be formed by decreasing the height of a portion of the partition 412 with respect to the rest of the partition 412.

The first glass panel 1 and the second glass panel 2 are loaded into a bonding furnace with the sealing member 41, the plurality of spacers 43, and the getter 45 sandwiched between them, and heated in the furnace. This allows the first glass panel 1 and the second glass panel 2 to be hermetically bonded together with the frame 410 that melts under the heat.

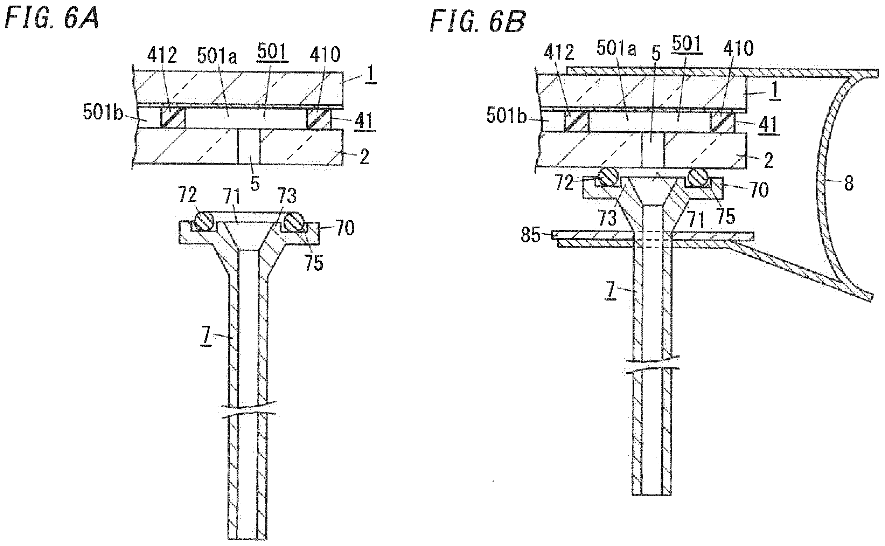

The exhausting step S2 includes reducing the pressure in the inner space 501 using a highly heat-resistant exhaust pipe 7 shown in FIGS. 6A and 6B.

The exhaust pipe 7 may be made of a metal such as stainless steel, for example. The exhaust pipe 7 has a tip portion 70 with a larger diameter than any other portion thereof. There is an opening 71 penetrating through a center portion of the tip portion 70. An annular groove 75 is provided so as to surround the opening 71 of the tip portion 70. A highly heat-resistant O-ring 72 is fitted into the groove 75. When fitted into the groove 75, the O-ring 72 partially protrudes with respect to the tip portion 70 of the exhaust pipe 7. Between the groove 75 and opening 71 of the tip portion 70, provided is a deformation reducing portion 73 for reducing an inward deformation of the O-ring 72. The deformation reducing portion 73 is an annular projection provided to protrude from the bottom of the groove 75.

In the exhausting step S2, the exhaust pipe 7 may be used in the following manner.

First of all, the exhaust pipe 7 is placed in position with the tip portion 70 (i.e., opening 71) thereof facing the exhaust port 5 as shown in FIG. 6A.

Next, as shown in FIG. 6B, the O-ring 72 of the exhaust pipe 7 is pressed against an area, surrounding the exhaust port 5 entirely along the circumference, of an outer surface 24 of the second glass panel 2.

At this point in time, a clip 8 made of a highly heat-resistant metal (e.g., a nickel-base superalloy) is put on to pinch the tip portion 70 of the exhaust pipe 7 and the first and second glass panels 1 and 2. The clip 8 has elasticity. This allows the O-ring 72 to be kept pressed, with biasing force, against the outer surface 24 of the second glass panel 2. According to this exemplary embodiment, a plate member 85 of a highly heat-resistant material (such as mica) is interposed between the clip 8 and the tip portion 70 of the exhaust pipe 7.

In the state shown in FIG. 6B, interposing the O-ring 72 between the second glass panel 2 and the exhaust pipe 7 allows the opening 71 of the exhaust pipe 7 and the exhaust port 5 to hermetically communicate with each other.

Sucking the air in the exhaust pipe 7 with an appropriate vacuum suction device in such a state evacuates the inner space 501 (including the spaces 501a and 501b) between the first and second glass panels 1 and 2 through the exhaust port 5.

The sealing step S3 includes heating and melting the partition 412 at a predetermined temperature, thus deforming the partition 412 to close the air passage 414. This allows the space 501b, forming a major part of the inner space 501, to be sealed up while maintaining a reduced pressure (a degree of vacuum).

That is to say, the sealing step S3 includes sealing the inner space 501 up at the reduced pressure by heating, melting, and thereby deforming, the sealant (i.e., the partition 412) located in the inner space 501.

According to this exemplary embodiment, setting the melting temperature of the partition 412 at a value higher than the melting temperature of the frame 410 prevents the partition 412 from being deformed and closing the air passage 414 during the bonding step S1. However, as long as the air passage 414 is not closed during the bonding step S1 or the exhausting step S2 but is closed during the sealing step S3, the respective melting temperatures of the frame 410 and the partition 412 may be set at any of various other values.

For example, even if the respective melting temperatures of the frame 410 and the partition 412 are equal to each other (or even if the melting temperature of the partition 412 is lower than the melting temperature of the frame 410), setting the temperature of a bonding furnace at a value higher than the melting temperature(s) of the frame 410 and the partition 412 in the bonding step S1 allows the first and second glass panels 1 and 2 to be hermetically bonded together with the frame 410 before the partition 412 is deformed to the point of closing the air passage 414. After the glass panels 1 and 2 have been bonded together, the exhausting step S2 may be performed with the temperature of the bonding furnace kept lower than the melting temperature of the frame 410 and the partition 412. Thereafter, the sealing step S3 may be performed with the temperature of the bonding furnace set at a value higher than the melting temperature of the partition 412 to allow the partition 412 to be deformed to the point of closing the air passage 414.

After the sealing step S3 is finished, the clip 8 and the plate member 85 are removed, and the exhaust pipe 7 is removed. The exhaust pipe 7 removed is reused over and over again.

Thus, a glass panel unit manufactured through these steps S1, S2, and S3 exhibits excellent thermal insulating properties because of the presence of the inner space 501 (among other things, the space 501b that has had its pressure reduced to a vacuum). Furthermore, there are slim chances of the exhaust pipe 7 leaving traces on the glass panel unit manufactured through these steps S1, S2, and S3. This makes the sealing traces much less noticeable and reduces the chances of the sealing traces causing damage to the glass panel unit.

In the glass panel unit according to the exemplary embodiment, a single exhaust port 5 is provided for the second glass panel 2. Alternatively, a plurality of exhaust ports 5 may be provided for the second glass panel 2, or a single or a plurality of exhaust ports 5 may be provided for the first glass panel 1. Still alternatively, a single or a plurality of exhaust ports 5 may be provided for the first glass panel 1 and a single or a plurality of exhaust ports 5 may be provided for the second glass panel 2 as well. In any of these cases, the air in the inner space 501 may be sucked up through the exhaust port(s) 5 with the exhaust pipe(s) 7 and clip(s) 8 described above, the inner space 501 may be sealed up, and then the exhaust pipe(s) 7 and the clip(s) 8 may be removed.

Also, the glass panel unit according to the exemplary embodiment includes only one arc-shaped partition 412. However, this is only an example and should not be construed as limiting. Alternatively, the partition 412 may have any other shape and any other number of partitions 412 may be provided instead. For example, a plurality of partitions 412 may be provided for the region surrounded with the frame 410 such that when sealed, the space inside the frame 410 will be separated into three or more spaces. Furthermore, in the glass panel unit according to the exemplary embodiment, the inner space 501 (i.e., the inner space 501b) is sealed up by deforming the partition 412. However, this is only an example and should not be construed as limiting. Alternatively, the inner space 501 may also be sealed up in any other manner. Examples of alternative methods for sealing the inner space 501 up include sealing the exhaust port 5 up with a sealing member such as a thermal adhesive.

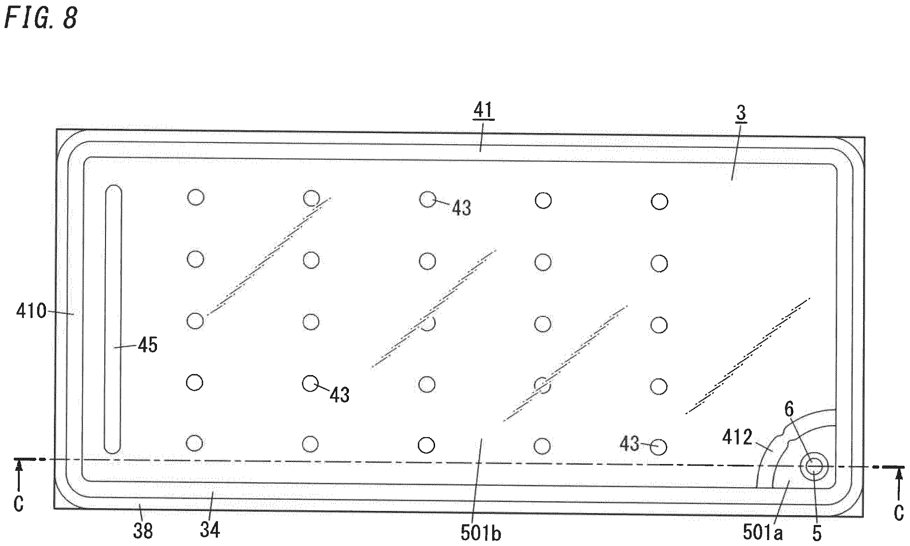

Next, a glass panel unit according to a modified example will be described with reference to FIGS. 8 to 10. This glass panel unit is a modified example of the glass panel unit according to the exemplary embodiment that has been described with reference to FIGS. 1 to 7. Thus, in the following description, any constituent member of the glass panel unit according to this modified example, having the same function as a counterpart of the glass panel unit according to the exemplary embodiment described above, will be designated by the same reference numeral as that counterpart's, and a detailed description thereof will be omitted herein.

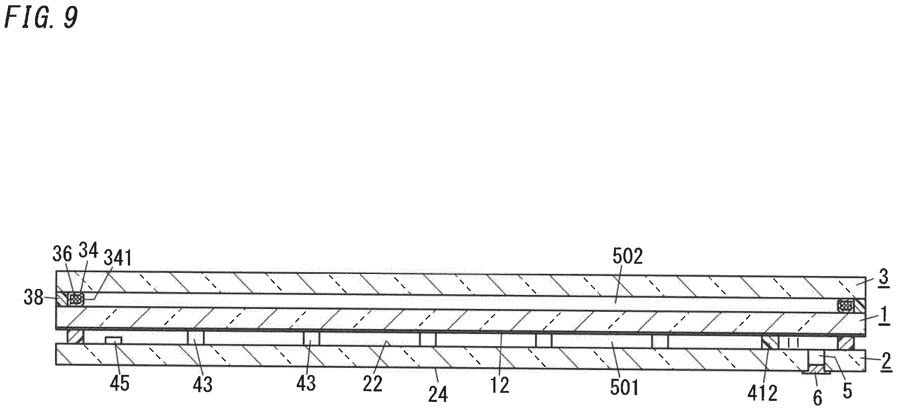

In a glass panel unit according to this modified example, a third glass panel 3 is stacked over the glass panel unit shown in FIGS. 1 and 2, and a second inner space 502 is formed between the third glass panel 3 and the first glass panel 1 (see FIGS. 8 and 9).

The glass panel unit according to this modified example includes: a hollow frame member 34 interposed between the respective peripheral portions of the third glass panel 3 and the first glass panel 1; a desiccant 36 filling the hollow of the frame member 34; and a second sealing member 38 formed in the shape of a frame surrounding the outer periphery of the frame member 34. The second inner space 502 is a space surrounded entirely with the frame member 34 and the second sealing member 38.

The frame member 34 is made of a metallic material such as aluminum and has through holes 341 on the inner perimeter thereof. The hollow of the frame member 34 communicates, via the through holes 341, with the second inner space 502. The desiccant 36 may be a silica gel, for example. The second sealing member 38 may be made of a highly airtight resin such as a silicone resin or butyl rubber.

The second inner space 502 surrounded with the frame member 34 and the second sealing member 38 between the first glass panel 1 and the third glass panel 3 is a space hermetically sealed out from the outside. The second inner space 502 may be filled with a dry gas (e.g., a dry rare gas such as argon gas or dry air).

Next, respective steps for manufacturing the glass panel unit according to this modified example will be described.

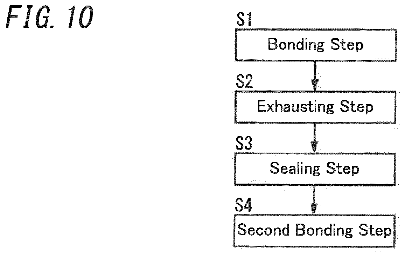

As shown in FIG. 10, the method for manufacturing the glass panel unit according to the modified example includes not only the bonding step S1, exhausting step S2, and sealing step S3 described above but also a second bonding step S4 as well.

The second bonding step S4 includes hermetically bonding the first glass panel 1 and the third glass panel 3 together with the second sealing member 38, i.e., with the frame member 34 and the second sealing member 38 interposed between them. Thus, a triple-layer glass panel unit is formed.

In the glass panel unit according to this modified example, the third glass panel 3 is arranged to face the first glass panel 1. However, this is only an example and should not be construed as limiting. Alternatively, the third glass panel 3 may also be arranged to face the second glass panel 2. In that case, the second sealing step S4 includes bonding respective peripheral portions of the second glass panel 2 and the third glass panel 3 with the second sealing member 38, with the frame member 34 and the second sealing member 38 interposed between the second glass panel 2 and the third glass panel 3. This allows a second inner space 502, filled with a dry gas, to be formed between the second glass panel 2 and the third glass panel 3.

Next, a building component including the glass panel unit according to the exemplary embodiment will be described.

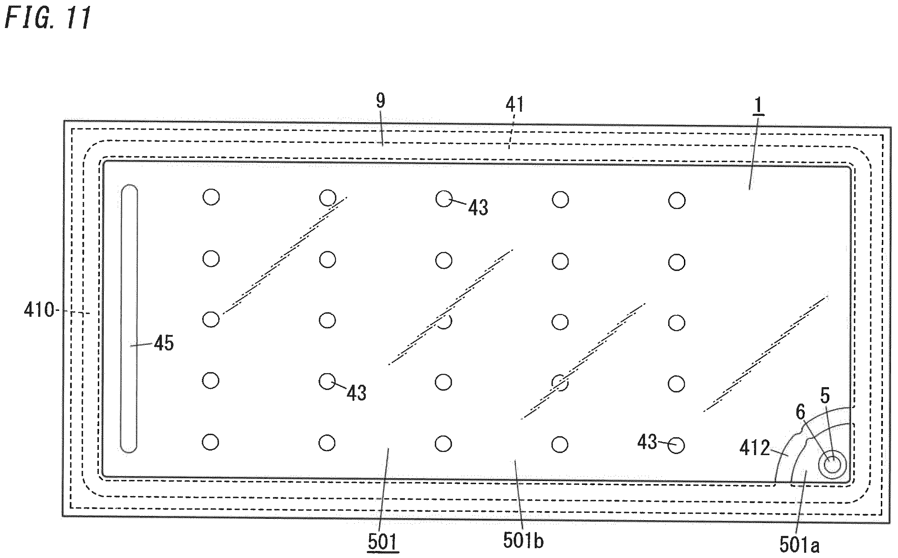

FIG. 11 illustrates a building component including the glass panel unit according to the exemplary embodiment. This building component is obtained by fitting a building component frame 9 into the glass panel unit according to the exemplary embodiment.

The building component frame 9 may be a window frame, for example. The building component shown in FIG. 11 is a window including the glass panel unit according to the exemplary embodiment and the building component frame 9 (window frame). However, this is only an example and should not be construed as limiting. Examples of other building components including the glass panel unit according to the exemplary embodiment include an entrance door and a room door, to name just a few.

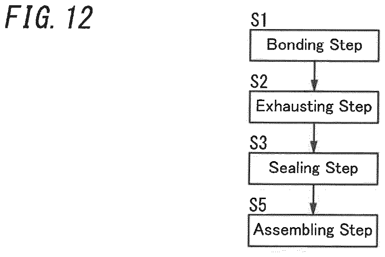

A method for manufacturing a building component including the glass panel unit according to the exemplary embodiment includes not only the respective steps of the method for manufacturing the glass panel unit according to the exemplary embodiment (see FIG. 7) but also an assembling step S5 as well, as shown in FIG. 12.

The assembling step S5 is the step of fitting a rectangular building component frame 9 into a perimeter of the glass panel unit manufactured through the respective steps S1, S2, and S3 of the glass panel unit manufacturing method according to the exemplary embodiment described above.

A building component (e.g., a window) manufactured by performing these steps S1, S2, S3, and S5 includes a glass panel unit in which the inner space 501 has been formed, and therefore, exhibits an excellent thermal insulation property.

Likewise, the building component frame 9 may also be fitted into the glass panel unit according to the modified example shown in FIGS. 8 to 10 in the same way through the assembling step S5. In that case, a building component manufactured by performing these steps S1, S2, S3, S4, and S5 includes a glass panel unit in which the inner space 501 and the second inner space 502 have been formed, and therefore, exhibits an excellent thermal insulation property.

As can be seen from the foregoing description with reference to the accompanying drawings, a glass panel unit manufacturing method according to the exemplary embodiment and modified examples thereof includes a bonding step S1, an exhausting step S2, and a sealing step S3.

The bonding step S1 includes bonding together, with a sealing member 41 in a frame shape, a first glass panel 1 and a second glass panel 2 that are arranged to face each other and thereby forming, between the first glass panel 1 and the second glass panel 2, an inner space 501 surrounded with the sealing member 41.

The exhausting step S2 includes exhausting air from the inner space 501 through an exhaust port 5 that at least one of the first glass panel 1 or the second glass panel 2 has. The sealing step S3 includes sealing the inner space 501 up at a reduced pressure.

The exhausting step S2 includes exhausting the air through the exhaust port 5 and an exhaust pipe 7 detachably connected to the exhaust port 5.

Thus, the glass panel unit manufacturing method according to the exemplary embodiment and modified examples thereof allows a glass panel unit with excellent thermal insulation properties to be manufactured in such a way that reduces the chances of leaving traces of the exhaust pipe 7, and also makes the exhaust pipe 7, used in the exhausting step S2, reusable.

In the glass panel unit manufacturing method according to the exemplary embodiment and modified examples thereof, the exhaust pipe 7 includes: an opening 71 located at a tip portion 70 thereof; an O-ring 72 provided to surround the opening 71; and a deformation reducing portion 73. The deformation reducing portion 73 is provided between the opening 71 and the O-ring 72 and configured to reduce inward deformation of the O-ring 72.

Thus, the glass panel unit manufacturing method according to the exemplary embodiment and modified examples thereof allows the air to be exhausted with the exhaust port 5 and the exhaust pipe 7 hermetically communicating with each other via the O-ring 72, and also makes the exhaust pipe 7 easily attachable and detachable.

In the glass panel unit manufacturing method according to the exemplary embodiment and modified examples thereof, the exhaust pipe 7 further includes an annular groove 75 to which the O-ring 72 is fitted, and the deformation reducing portion 73 is a projection provided between the opening 71 and the groove 75.

Thus, the glass panel unit manufacturing method according to the exemplary embodiment and modified examples thereof allows a projection, serving as the deformation reducing portion 73, to reduce the deformation of the O-ring 72 due a difference in atmospheric pressure between the inside and outside of the O-ring 72.

In the glass panel unit manufacturing method according to the exemplary embodiment and modified examples thereof, the exhaust pipe 7 is kept connected to the exhaust port 5 throughout the exhausting step S2 and the sealing step S3, and then is removed after the sealing step S3 is finished.

Thus, the glass panel unit manufacturing method according to the exemplary embodiment and modified examples thereof allows the inner space 501 to have its pressure reduced by the use of the exhaust pipe 7 and to be hermetically sealed up with the reduced pressure maintained, and also allows the exhaust pipe 7 to be removed and reused after the sealing.

In the glass panel unit manufacturing method according to the invention, the exhaust pipe 7 is detachably connected to the exhaust port 5 with a highly heat-resistant clip 8.

Thus, the glass panel unit manufacturing method according to the exemplary embodiment and modified examples thereof allows the exhaust pipe 7 to be connected, with the clip 8, to the exhaust port 5 only during a step that requires the exhaust pipe 7, and to be easily removed after the step is finished.

The glass panel unit manufacturing method according to a modified example further includes a second bonding step S4. The second bonding step S4 includes bonding a third glass panel 3, via a second sealing member 38 in a frame shape, onto either the first glass panel 1 or the second glass panel 2 to form a second inner space 502 surrounded with the second sealing member 38.

A glass panel unit manufactured by this manufacturing method has the second inner space 502 as well as the inner space 501, and therefore, exhibits even better thermal insulation properties.

A building component manufacturing method includes an assembling step S5 of fitting a building component frame 9 into the glass panel unit manufactured by the glass panel unit manufacturing method according to the exemplary embodiment or a modified example thereof. That is to say, a method for manufacturing a building component including the glass panel unit according to the exemplary embodiment includes not only the bonding step S1, exhausting step S2, and sealing step S3 described above, but also the assembling step S5 as well. A method for manufacturing a building component including the glass panel unit according to a modified example thereof includes not only the bonding step S1, exhausting step S2, sealing step S3, and second bonding step S4 described above, but also the assembling step S5 as well.

This manufacturing method allows a building component (such as a window) including a glass panel unit with excellent thermal insulation properties to be manufactured in such a way that reduces the chances of leaving traces of the exhaust pipe 7, and also makes the exhaust pipe 7, used in the exhausting step S2, reusable.

### Reference Signs List

- 1: First Glass Panel
- 2: Second Glass Panel
- 3: Third Glass Panel
- 5: Exhaust Port
- 7: Exhaust Pipe
- 9: Building Component Frame
- 38: Second Sealing Member
- 41: Sealing Member
- 70: Tip portion
- 71: Opening
- 72: O-Ring
- 73: Deformation Reducing Portion
- 75: Groove
- 8: Clip
- 501: Inner Space
- 502: Second Inner Space
- S1: Bonding Step
- S2: Exhausting Step
- S3: Sealing Step
- S4: Second Bonding Step
- S5: Assembling Step

## Claims

1. A glass panel unit manufacturing method comprising:
a bonding step of bonding together, with a sealing member (41) in a frame shape, a first glass panel (1) and a second glass panel (2) that are arranged to face each other and thereby forming, between the first glass panel (1) and the second glass panel (2), an inner space (501) surrounded with the sealing member (41);
an exhausting step of exhausting air from the inner space (501) through an exhaust port (5) that at least one of the first glass panel (1) or the second glass panel (2) has; and
a sealing step of sealing up the inner space (501) with a reduced pressure,
**characterized in that:**
the exhausting step including exhausting the air through the exhaust port (5) and an exhaust pipe (7) detachably connected to the exhaust port (5); and
the exhaust pipe (7) is detachably connected to the exhaust port (5) with a highly heat-resistant clip.

2. The glass panel unit manufacturing method of claim 1, wherein
the exhaust pipe (7) comprises:
an opening (71) located at a tip portion (70) thereof;
an O-ring (72) provided to surround the opening (71); and
a deformation reducing portion (73) provided between the opening (71) and the O-ring (72) and configured to reduce inward deformation of the O-ring (72).

3. The glass panel unit manufacturing method of claim 2, wherein
the exhaust pipe (7) further comprises a groove (75) formed in an annular shape, to which the O-ring (72) is fitted, and
the deformation reducing portion (73) comprises a projection provided between the opening (71) and the groove (75).

4. The glass panel unit manufacturing method of any one of claims 1 to 3, wherein
the exhaust pipe (7) is kept connected to the exhaust port (5) throughout the exhausting step and the sealing step, and then is removed after the sealing step is finished.

5. The glass panel unit manufacturing method of any one of claims 1 to 4, further comprising a second bonding step of bonding a third glass panel (3), via a second sealing member (38) in a frame shape, onto either the first glass panel (1) or the second glass panel (2) to form a second inner space (502) surrounded with the second sealing member (38).

6. A building component manufacturing method comprising the step of manufacturing a glass panel unit by the glass panel unit manufacturing method of any one of the claims of claims 1 to 5 and an assembling step of fitting a building component frame into the glass panel unit.

## Patentansprüche

1. Glasplatteneinheit-Herstellungsverfahren, umfassend:
einen Verbindungsschritt des Miteinanderverbindens, mit einem Dichtungsglied (41) in einer Rahmenform, einer ersten Glasplatte (1) und einer zweiten Glasplatte (2), die so angeordnet sind, dass sie einander zugewandt sind, und dadurch Bilden, zwischen der ersten Glasplatte (1) und der zweiten Glasplatte (2), eines Innenraums (501), der mit dem Dichtungsglied (41) umgeben ist;
einen Auslassschritt des Auslassens von Luft aus dem Innenraum (501) durch eine Auslassöffnung (5), die zumindest eine der ersten Glasplatte (1) oder der zweiten Glasplatte (2) aufweist; und
einen Abdichtungsschritt, bei dem der Innenraum (501) mit einem reduzierten Druck abgedichtet wird,
**dadurch gekennzeichnet, dass:**
der Auslassschritt ein Auslassen der Luft durch die Auslassöffnung (5) und ein Auslassrohr (7) umfasst, das abnehmbar mit der Auslassöffnung (5) verbunden ist; und
das Auslassrohr (7) mit einem hochhitzebeständigen Clip abnehmbar mit der Auslassöffnung (5) verbunden ist.

2. Glasplatteneinheit-Herstellungsverfahren nach Anspruch 1, wobei das Auslassrohr (7) umfasst:
eine Öffnung (71), die sich an einem Spitzenabschnitt (70) davon befindet;
einen O-Ring (72), der so bereitgestellt ist, dass er die Öffnung (71) umgibt; und
einen Verformungsreduzierungsabschnitt (73), der zwischen der Öffnung (71) und dem O-Ring (72) bereitgestellt und konfiguriert ist, eine Einwärtsverformung des O-Rings (72) zu reduzieren.

3. Glasplatteneinheit-Herstellungsverfahren nach Anspruch 2, wobei das Auslassrohr (7) ferner eine in einer ringförmigen Form ausgebildete Nut (75) umfasst, an die der O-Ring (72) gepasst ist, und
der Verformungsreduzierungsabschnitt (73) einen Vorsprung umfasst, der zwischen der Öffnung (71) und der Nut (75) bereitgestellt ist.

4. Glasplatteneinheit-Herstellungsverfahren nach einem der Ansprüche 1 bis 3, wobei
das Auslassrohr (7) während des gesamten Auslassschritts und des Abdichtungsschritts mit der Auslassöffnung (5) verbunden bleibt und dann nach Abschluss des Abdichtungsschritts entfernt wird.

5. Glasplatteneinheit-Herstellungsverfahren nach einem der Ansprüche 1 bis 4, ferner umfassend einen zweiten Verbindungsschritt des Verbindens einer dritten Glasplatte (3), über ein zweites Dichtungsglied (38) in einer Rahmenform, entweder auf die erste Glasplatte (1) oder die zweite Glasplatte (2), um einen zweiten Innenraum (502) zu bilden, der mit dem zweiten Dichtungsglied (38) umgeben ist.

6. Bauteil- bzw. Baukomponenten-Herstellungsverfahren, umfassend den Schritt des Herstellens einer Glasplatteneinheit durch das Glasplatteneinheit-Herstellungsverfahren nach einem der Ansprüche von Ansprüchen 1 bis 5 und einen Montageschritt des Einpassens eines Bauteil- bzw. Baukomponentenrahmens in die Glasplatteneinheit.

## Revendications

1. Procédé de fabrication d'unité de panneaux de verre comprenant :
une étape d'assemblage consistant à assembler ensemble, avec un élément de scellement (41) en une forme de cadre, un premier panneau de verre (1) et un deuxième panneau de verre (2) qui sont agencés pour se faire face l'un l'autre et former de ce fait, entre le premier panneau de verre (1) et le deuxième panneau de verre (2), un espace interne (501) entouré de l'élément de scellement (41) ;
une étape d'échappement consistant à laisser s'échapper de l'air de l'espace interne (501) à travers un port d'échappement (5) qu'a au moins un du premier panneau de verre (1) ou du deuxième panneau de verre (2) ; et
une étape de scellement consistant à sceller l'espace interne (501) avec une pression réduite,
**caractérisé en ce que :**
l'étape d'échappement incluant laisser s'échapper l'air à travers le port d'échappement (5) et un tuyau d'échappement (7) connecté de manière amovible au port d'échappement (5) ; et
le tuyau d'échappement (7) est connecté de manière amovible au port d'échappement (5) avec une agrafe hautement thermorésistante.

2. Procédé de fabrication d'unité de panneaux de verre selon la revendication 1, dans lequel
le tuyau d'échappement (7) comprend :
une ouverture (71) située au niveau d'une portion de pointe (70) de celui-ci ;
un joint torique (72) prévu pour entourer l'ouverture (71) ; et
une portion de réduction de déformation (73) prévue entre l'ouverture (71) et le joint torique (72), et configurée pour réduire la déformation vers l'intérieur du joint torique (72).

3. Procédé de fabrication d'unité de panneaux de verre selon la revendication 2, dans lequel
le tuyau d'échappement (7) comprend en outre une rainure (75) formée en une forme annulaire sur laquelle le joint torique (72) est ajusté, et
la portion de réduction de déformation (73) comprend une saillie prévue entre l'ouverture (71) et la rainure (75).

4. Procédé de fabrication d'unité de panneaux de verre selon l'une quelconque des revendications 1 à 3, dans lequel
le tuyau d'échappement (7) est maintenu connecté au port d'échappement (5) pendant toute l'étape d'échappement et l'étape de scellement, puis est retiré après que l'étape de scellement est finie.

5. Procédé de fabrication d'unité de panneaux de verre selon l'une quelconque des revendications 1 à 4, comprenant en outre une seconde étape d'assemblage consistant à assembler un troisième panneau de verre (3), par le biais d'un second élément de scellement (38) en une forme de cadre, sur le premier panneau de verre (1) ou le deuxième panneau de verre (2) pour former un second espace interne (502) entouré du second élément de scellement (38).

6. Procédé de fabrication de composant de construction comprenant l'étape de fabrication d'une unité de panneaux de verre par le procédé de fabrication d'unité de panneaux de verre selon l'une quelconque des revendications 1 à 5 et une étape d'assemblage consistant à ajuster un cadre de composant de construction dans l'unité de panneaux de verre.
